(19) Europäisches Patentamt
European Patent Office
Office européen des brevets

(11) EP 0 665 427 B1

(12) # EUROPÄISCHE PATENTSCHRIFT

(45) Veröffentlichungstag und Bekanntmachung des Hinweises auf die Patenterteilung:
**02.08.2000 Patentblatt 2000/31**

(51) Int Cl.$^7$: **G01N 27/00**

(21) Anmeldenummer: **95100785.5**

(22) Anmeldetag: **20.01.1995**

(54) **Piezoelektrischer Gassensor**

Piezoelectric gas sensor

Capteur de gaz piézoélectrique

(84) Benannte Vertragsstaaten:
**AT BE CH DE DK ES FR GB IT LI NL SE**

(30) Priorität: **29.01.1994 DE 4402671**

(43) Veröffentlichungstag der Anmeldung:
**02.08.1995 Patentblatt 1995/31**

(73) Patentinhaber: **Ticona GmbH**
**65451 Kelsterbach (DE)**

(72) Erfinder:
- **Feucht, Gernot, Dr.**
  **D-67112 Mutterstadt (DE)**
- **Schleicher, Andreas, Dr.**
  **D-64683 Einhausen (DE)**
- **Frank, Georg, Dr.**
  **D-65719 Hofheim (DE)**

(56) Entgegenhaltungen:
- **ANALYTICAL CHEMISTRY, Bd. 57, Nr. 13, November 1985, Seiten 2634-2638, XP002024563 H. M. FOG: "PIEZOELECTRIC CRYSTAL DETECTOR FOR THE MONITORING OF OZONE IN WORKING ENVIRONMENTS"**
- **CHIMIA, Bd. 28, Nr. 9, September 1974, Seiten 567-575, XP002024564 VON R. GABLER: "NEUE POLYPHENYLENSULFONE REAKTIONEN AN FESTEN POLYMEREN"**
- **PATENT ABSTRACTS OF JAPAN vol. 10, no. 149 (P-461), 30.Mai 1986 & JP-A-61 003038 (NITSUSHIN DENKI K. K.), 9.Januar 1986,**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 665 427 B1

Printed by Jouve, 75001 PARIS (FR)

## Beschreibung

Es ist bekannt (JP 84-123975), daß Leitfähigkeitssensoren aus Polyphenylensulfid mit Au-Elektroden zum Nachweis von extrem reaktiven Gasen wie $SO_2F_2$ und $SOF_2$ verwendet werden können. Dabei wird $SO_2$ in das Polymer unter Bildung von Kettenvernetzungen eingebaut. Die hierbei auftretende Leitfähigkeitsänderung wird detektiert. Mit diesem Sensor lassen sich jedoch Ozon, Halogen oder peroxidhaltige Verbindungen nicht nachweisen. Problematisch bei diesem Prinzip ist die Korrosionsfestigkeit der Au-Elektroden gegenüber den zu detektierenden Gasen.

Es ist bekannt (Anal. Chem., 57(13), 2634-8, 1985), daß Ozon mit einem piezoelektrischen 1,4-Polybutadien-beschichteten Sensor nachgewiesen werden kann. Von Nachteil bei diesem Sensor ist die Herstellung des Polymerüberzugs durch Auftragen mit einer Bürste, wobei die Oberfläche der Kontaktierung verletzt werden kann. Die Homogenität der Schicht ist durch diese Verfahren ebenfalls nicht reproduzierbar, was durch den angegebenen stark schwankenden Frequenzänderungsbereich von 2000 bis 10000 Hz bestätigt wird. Darüber hinaus sind die beobachteten Frequenzänderungen durch die absorbierten Ozonmengen im ppb-Bereich sehr klein.

Es ist bekannt, daß elektronische Frequenzgeneratoren zur Schwingungserzeugung ein piezoelektrisches Element aus Quarz oder Blei/Zirkoniumtitanat-Keramik nutzen. Eine der Resonanzfrequenzen wird zur Detektion von Massenänderungen ausgewählt und von einem zugeschalteten externen Frequenzgenerator verstärkt.

Es ist bekannt, daß der Zusammenhang zwischen Grundschwingung (Periode T) und Masse m des harmonischen Oszillators dabei lautet:

$$T = 2\,\pi\,\sqrt{\frac{m \bullet s}{K}} \qquad (1)$$

wobei s die Auslenkung und K die Rückstellkraft der schwingenden Masse ist. Dann gilt, aufgrund des Zusammenhangs zwischen Schwingungsfrequenz und Schwingungsamplitude

$$F^2 = 1\,/\,T^2 = \mathrm{const}\,/\,m \qquad (2)$$

Gleichung (2) zeigt also, daß eine Erhöhung der schwingenden Masse, z.B. durch Chemisorptionsprozesse eine Frequenzverschiebung der Resonanzfrequenz des piezoelektrischen Materials zur Folge hat.
Der Ausdruck const in Gleichung (2) steht dabei für Materialkonstanten (akustische Impedanz, Schermodul) des piezoelektrisch aktiven Materials.

Zum Beispiel bei Quarz ergibt sich für die Frequenzänderung $\Delta f$ die folgende Funktion:

$$\Delta f = -\,2{,}3 \bullet 10^6 \bullet F^2 \bullet \Delta m\,/\,A \qquad (3)$$

dabei ist A die schwingende Fläche, F die Grundschwingung und $\Delta m$ die Massenänderung.
Wird die schwingende Fläche (z.B. eine Quarzscheibe) mit einem Überzug versehen, so ändert sich die Frequenz des Systems aufgrund der Massenzunahme nach der Beziehung (3).
Hat der Überzug absorbierende Eigenschaften bezüglich eine Stoffes oder mehrerer Stoffe im Umgebungsmedium, reagiert das schwingende System mit einer Frequenzänderung auf eine stattfindende Absorption. Die Eigenschaften des Sensors (Selektivität, Empfindlichkeit, Regenerierbarkeit, Kumulierbarkeit) können durch entsprechende Auswahl des Absorbers in weiten Grenzen eingestellt werden.

Aufgabe ist es, einen Sensor zum Nachweis von Ozon, Halogen und peroxidhaltigen Verbindungen bereitzustellen, der korrosionsbeständig ist, reproduzierbar herstellbar ist, ein hohes Absorptionsvermögen aufweist und schnell die zu detektierenden Gase zu einer nichtflüchtigen Verbindung umsetzt.

Es wurde überraschend gefunden, daß durch den Einsatz von Polyarylenthioethern auf Piezokristallen mit geeigneter Beschichtungs- und Nachbehandlungstechnik die oben genannten Nachteile beseitigt und die gewünschten Eigenschaften erhalten werden. Dadurch erhält man Detektoren zum quantitativen Nachweis von Halogenen, peroxidhaltigen Verbindungen und Ozon.

Gegenstand der Erfindung ist ein Sensor aus einem piezoelektrischen Kristall mit einer Polyarylenthioether-enthaltenden Beschichtung.

Im Sinne der Erfindung verwendbare Polymere sind Polyarylensysteme mit Wiederholungseinheiten der Formel I, die mindestens eine Thioethergruppe enthalten,

$$-[(Ar^1)_n-X]_m-[(Ar^2)_i-Y]_j-[(Ar^3)_k-Z]_l-[(Ar^4)_o-W]_p- \qquad (I)$$

worin

$Ar^1$, $Ar^2$, $Ar^3$ und $Ar^4$ gleiche oder verschiedene Arylsysteme mit 6 bis 18 C-Atomen sind,
W, X, Y und Z gleiche oder verschiedene Verknüpfungsgruppen sind,
ausgewählt aus $-SO_2-$, -S-, -SO-, -O-, -CO-, $-CO_2-$, Alkylen oder Alkyliden mit 1 bis 6 C-Atomen und $-NR^1-$, wobei $R^1$ für eine Alkyl- oder Alkylid-Gruppe mit 1 bis 6 C-Atomen steht und mindestens eine Verknüpfungsgruppe -S- sein muß,
n, m, i, j, k, l, o, p gleich oder verschieden ganze Zahlen Null, 1, 2, 3 oder 4 sind, wobei ihre Summe mindestens 2 ergeben muß.

Bei den Arylensystemen handelt es sich um einfache Arylene wie Phenylen oder Naphthylen oder um direkt para-, meta- oder orthoverknüpfte Arylensysteme wie Biphenylen.

Für die Erfindung bevorzugt verwendete Polymere sind Polyarylene mit Wiederholungseinheiten der Formeln (II-VIII):

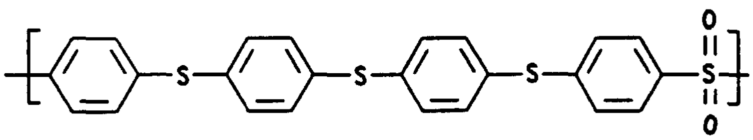

(II)

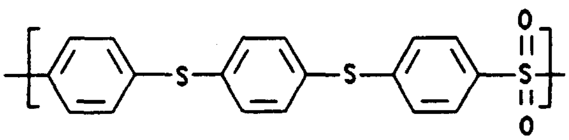

(III)

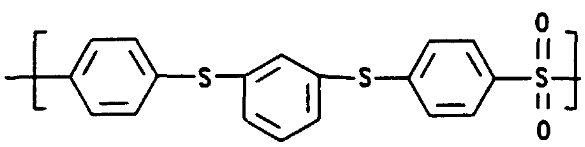

(IV)

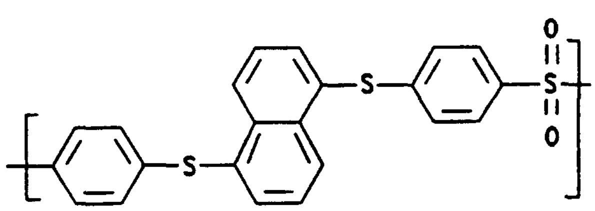

(V)

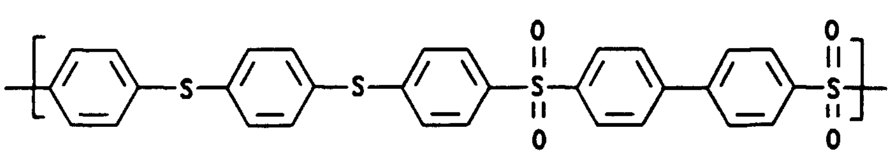

(VI)

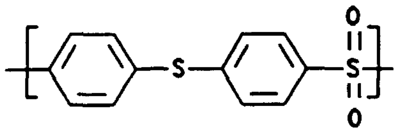

(VII)

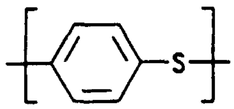

(VIII)

Besonders bevorzugt gemäß der Erfindung sind die Polyphenylensulfide (PPS) mit Wiederholungseinheiten der Formel (VIII). Die Synthesen der Polyarylene mit Wiederholungseinheiten der Formel II-VI werden in Chimia 28 (9), 567, der Polyarylene mit Wiederholungseinheiten der Formel VII in der US-A-4,016,145 und der Polyarylene mit Wiederholungseinheiten der Formel VIII in der US-A-3,919,177, der US-A-4,038,262 und der US-A-4,282,347 beschrieben.

Für die Erfindung sind lineare und verzweigte Polyarylensysteme mit Wiederholungseinheiten der Formel I geeignet, die ein mittleres Molekulargewicht von 10000 bis 200000, vorzugsweise ein Molekulargewicht von 15000 bis 150000, aufweisen. Es können auch Mischungen verschiedener Polyarylensysteme mit Wiederholungseinheiten der Formel I verwendet werden.

Gemäß der Erfindung können alle Kristalle verwendet werden, die einen piezoelektrischen Effekt zeigen.

Bevorzugt sind im Sinne der Erfindung anorganische piezoelektrische Kristalle wie Erdalkalititanate, Blei-Zirkoniumtitanate und Quarze, besonders bevorzugt sind Erdalkalititanate, insbesondere Bariumtitanat, und Quarz.

Im Sinne der Erfindung können piezoelektrische Kristalle verwendet werden, die in einem Frequenzbereich von 20 kHz bis 100 MHz, bevorzugt von 0,1 MHz bis 50 MHz, und besonders bevorzugt von 0,1 MHz bis 30 MHz ihre Grundschwingung haben. Es können auch Oberschwingungen für den Nachweis verwendet werden, deren Frequenzen in einem Frequenzbereich von 1 MHz bis 1000 MHz, vorzugsweise 30 MHz bis 500 MHz, liegen.

Erfindungsgemäß kann der Polyarylenthioether über allgemeine Beschichtungsverfahren auf die Piezokristalle einseitig oder beidseitig aufgebracht werden. Bevorzugt sind dabei Beschichtungsverfahren, die auf Polymer- oder Monomerlösungen basieren, z.B. Spincoating, Dipcoating oder Sprühverfahren. Als Lösemittel sind alle organischen Substanzen geeignet, die das jeweilige Polymer oder Monomer in ausreichender Konzentration lösen, beispielsweise Caprolactam, 1-Chlornaphthalin, 1-Methoxynaphthalin, Isochinolin, 2-Methoxynaphthalin oder 2,4,6-Trichlorphenol. Bei der Verwendung von einer Monomerlösung kann anschließend die Polymerisation durch allgemeine Oberflächenpolymerisationstechniken wie Laserinduktion oder Temperaturerhöhung erfolgen.

Gemäß der Erfindung erfolgt die Nachbehandlung der aufgebrachten Polymerschicht durch Trocknung in handelsüblichen Trocknungsanlagen an Luft, in Schutzgas oder im Vakuum bei Temperaturen zwischen 0 und 350°C, bevorzugt 30 - 300°C und besonders bevorzugt zwischen 50 und 250°C.

Erfindungsgemäß können zur Erzielung dickerer Polymerschichten mehrere Auftragungs- und Trocknungsschritte iterativ wiederholt werden.

Im Sinne der Erfindung liegt die Belegung des piezoelektrischen Kristalls nach der Trocknung im Bereich von 1 $ng/cm^2$ bis 100 $mg/cm^2$, bevorzugt bei 5 $ng/cm^2$ bis 10 $mg/cm^2$, und besonders bevorzugt bei 10 $ng/cm^2$ bis 2 $mg/cm^2$.

Nach der Beschichtung wird der Piezokristall auf Schwingfähigkeit kontrolliert.

Die aufgetragene Absorberschicht-Masse kann mittels (3) kontrolliert werden.

Erfindungsgemäß wird der so hergestellte Sensor in einer Durchflutungszelle mit definiertem Volumenstrom dem zu prüfenden Gas ausgesetzt. Eine Thermostatisierung ist nicht erforderlich. Die Sensorfrequenz wird entweder direkt ausgewertet oder mit einer stabilisierten Referenzfrequenz gemischt und dann ausgewertet (Auftragung der Frequenz oder der Frequenzänderung gegen die Zeit). Die Signaländerung kann durch nachgeschaltete Prozessoren direkt in Massenänderungen umgerechnet und auf einer Anzeige sichtbar gemacht werden. Der Sensor eignet sich besonders zum Nachweis von Ozon, Chlor, Brom, Fluor, Wasserstoffperoxid und Persäuren.

Die erfindungsgemäßen Sensoren können beispielsweise im Bereich Arbeitsschutz, bei Immissions- und Emissionsmessungen, sowie als Filterwächter eingesetzt werden.

Die Erfindung wird im folgenden anhand von Ausführungsbeispielen näher beschrieben.

Beispiel 1:

Kommerzielle HC-18 Quarze wurden aus ihrem Schutzgehäuse entfernt und in eine gesättigte Lösung von PPS (MW: 30000, Tm: 288°C) in Chlornaphthalin bei 200°C getaucht. Anschließend wurde der Sensor bei 120°C für 5 Stunden in einem kommerziellen Vakuumtrockenschrank getrocknet. Die Schwingungsfähigkeit des beschichteten Sensors wurde mit einem transistorisierten Oszillator, der Schwingquarze zwischen 0,1 und 30 MHz in Parallelresonanz schwingen läßt und einem 10-MHz-Frequenzzähler (Auflösung 0,1 Hz) mit zuschaltbarem Vorteiler und thermostatisierter Torzeitbasis getestet.

Die Frequenzänderung von 8 kHz ergibt eine Belegung von 50 µg PPS auf der Sensoroberfläche. Der Sensor wurde für 8 Stunden in mit $H_2O_2$ gesättigtem Wasserdampf betrieben. Die Frequenzänderung wurde alle 2 Stunden überprüft. Nach ca. 2 Stunden stellte sich eine lineare Frequenz-Zeit-Abhängigkeit ein, wie aus Tabelle 1 hervorgeht.

Tabelle 1

Sensortest

Versuchsparameter:

T= 120°C, E= Einwirkzeit, $F_o$ (Grundfrequenz) = 12,7 MHz

Δf: Frequenzverschiebung durch die Einwirkung des Prüfgases.

| | |
|---|---|
| 1. | Wasserdampf-Exposition von PPS-beschichteten Sensoren<br>Δf = 25 Hz (Mittelwert aus 4 Sensorsignalen)<br>E = 120 min |
| 2. | Wasserstoffperoxiddampf-Exposition (erzeugt aus einer wäßrigen Lösung mit 30% (m/m) $H_2O_2$).<br>Δf = 870 Hz (Mittelwert aus 4 Sensorsignalen)<br>E = 120 min |
| 3. | Wasserstoffperoxiddampf-Exposition<br>Δf = 166 Hz (Mittelwert aus 4 Sensorsignalen)<br>E = 120 min |
| 4. | Wasserstoffperoxiddampf-Exposition<br>Δf = 147 Hz (Mittelwert aus 4 Sensorsignalen) |
| 5. | Wasserstoffperoxiddampf-Exposition<br>Δf = 169 Hz (Mittelwert aus 4 Sensorsignalen) |
| 6. | Wasserstoffperoxiddampf-Exposition<br>Δf = 160 Hz (Mittelwert aus 4 Sensorsignalen) |

Durch eine ESCA-Analyse wurde die Chemisorptionswirkung des Sensors nachgewiesen. Im S 2p-Spektrum erkennt man die teilweise Oxidation der Thioethergruppen zu Sulfonverknüpfungsgruppen.

Beispiel 2:

Gemäß Beispiel 1 wurde ein Sensor hergestellt.

Versuchsparameter:

- Sensorbelegung: 50 µg
- Temperatur: 22°C
- Grundfrequenz nach Polymerbelegung: 12,7 MHz

- Ozonkonzentration: 0,11 $cm^3$ Ozon pro $m^3$ Luft
- Strömungsgeschwindigkeit: 0,01 $m^3/h$
- Versuchsdauer: 27 Stunden

Der Sensor zeigt während des Versuchs eine lineare zeitliche Frequenzabnahme mit einer Steigung von -2 Hz/h.

Beispiel 3:

Nachweis von Chlor

Die Herstellung der aktiven Nachweisschicht für Chlor geschah analog zum Beispiel 1. Allerdings war die Grundfrequenz des hier verwendeten Schwingquarzes höher, nämlich 18 MHz.

Versuchsparameter:

- Grundfrequenz vor Polymerbelegung: 18 MHz
- Frequenzänderung durch PPS-Belegung: 1,9 kHz
- Sensorbelegung: 10 µg PPS auf Schwingquarz
- Temperatur: Raumtemperatur
- Prüfgas: Chlor
- Strömungsgeschwindigkeit: 0,002 $m^3/h$
- Versuchsdauer: 10 Minuten

Die Versuchsdauer wurde wegen der extrem agressiven Atmosphäre zum Schutz des Meßgerätes kurz gehalten. Während der Meßdauer ergab sich eine Gesamtfrequenzabnahme von 15 kHz. Die Frequenzänderung war dabei nahezu linear mit einer Steigung von 1,5 kHz/Minute.

## Patentansprüche

1. Sensor aus einem piezoelektrischen Kristall mit einer Polyarylenthioether-enthaltenden Beschichtung.

2. Sensor gemäß Anspruch 1, dadurch gekennzeichnet, daß die Beschichtung mindestens ein Polyarylensystem enthält mit Wiederholungseinheiten der Formel I,

$$-[(Ar^1)_n-X]_m-[(Ar^2)_i-Y]_j-[(Ar^3)_k-Z]_l-[(Ar^4)_o-W]_p- \qquad (I)$$

die mindestens eine Thioethergruppe enthalten, worin

$Ar^1$, $Ar^2$, $Ar^3$ und $Ar^4$ gleiche oder verschiedene Arylsysteme mit 6 bis 18 C-Atomen sind,
W, X, Y und Z gleiche oder verschiedene Verknüpfungsgruppen sind,
ausgewählt aus $-SO_2-$, -S-, -SO-, -O-, -CO-, $-CO_2-$, Alkylen oder Alkyliden mit 1 bis 6 C-Atomen und $-NR^1-$, wobei $R^1$ für eine Alkyl- oder Alkylid-Gruppe mit 1 bis 6 C-Atomen steht und mindestens eine Verknüpfungsgruppe -S- sein muß,
n, m, i, j, k, l, o, p gleich oder verschieden ganze Zahlen Null, 1, 2, 3 oder 4 sind, wobei ihre Summe mindestens 2 ergeben muß.

3. Sensor gemäß Anspruch 1 oder 2, dadurch gekennzeichnet, daß die Beschichtung mindestens ein Polyarylen mit Wiederholungseinheiten der Formeln II, III, IV, V, VI, VII oder VIII

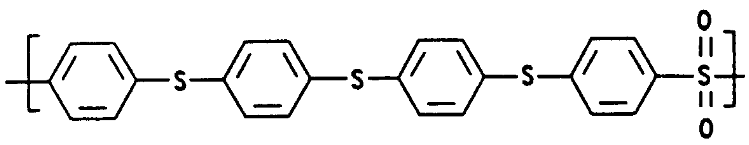

(II)

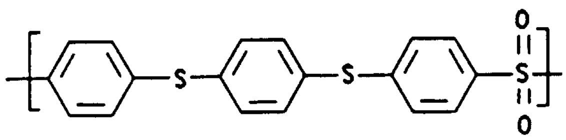

(III)

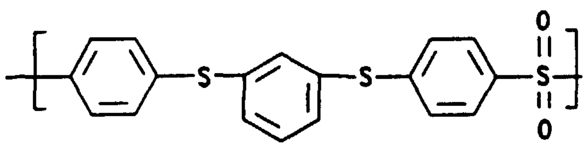

(IV)

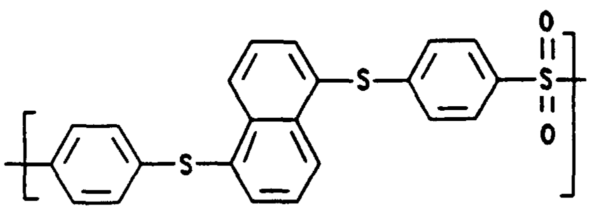

(V)

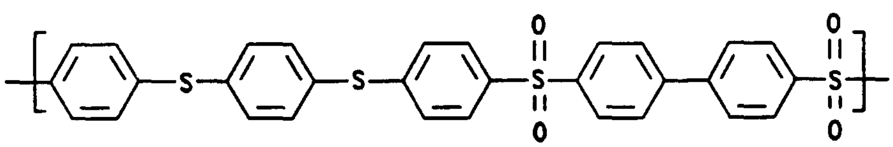

(VI)

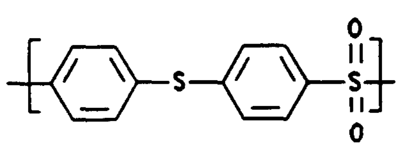

(VII)

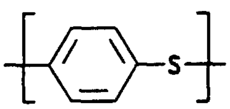

(VIII)

enthält.

**4.** Sensor gemäß Anspruch 3, dadurch gekennzeichnet, daß die Beschichtung ein Polyarylen mit Wiederholungseinheiten der Formel VIII enthält.

**5.** Sensor gemäß einem oder mehreren der Ansprüche 1 bis 4, dadurch gekennzeichnet, daß der piezoelektrische Kristall eine Grundschwingung in einem Frequenzbereich von 20 kHz bis 100 MHz, bevorzugt von 0,1 MHz bis 50 MHz, hat.

**6.** Sensor gemäß einem oder mehreren der Ansprüche 1 bis 5, dadurch gekennzeichnet, daß der piezoelektrische Kristall Oberschwingungen in einem Frequenzbereich von 1 MHz bis 1000 MHz, vorzugsweise 30 MHz bis 500 MHz, hat.

**7.** Sensor gemäß einem oder mehreren der Ansprüche 1 bis 6, dadurch gekennzeichnet, daß als piezoelektrischer Kristall ein Erdalkalititanat, Bleizirkoniumtitanat oder Quarz eingesetzt wird.

**8.** Sensor gemäß einem oder mehreren der Ansprüche 1 bis 7, dadurch gekennzeichnet, daß als piezoelektrischer Kristall Quarz eingesetzt wird.

**9.** Verwendung eines Sensors gemäß Anspruch 1 zum Nachweis von Halogen, peroxidhaltigen Verbindungen oder Ozon.

**10.** Verwendung eines Sensors gemäß Anspruch 1 im Bereich Arbeitsschutz, Immissions- und Emissionsmessungen sowie als Filterwächter.

**Claims**

**1.** A sensor comprising a piezoelectric crystal with a polyarylene thioether-containing coating.

**2.** The sensor as claimed in claim 1, wherein the coating contains at least one polyarylene system having repeating units of the formula I,

$$-[(Ar^1)_n-X]_m-[(Ar^2)_i-Y]_j-[(Ar^3)_k-Z]_l-[(Ar^4)_o-W]_p- \qquad (I)$$

which contain at least one thioether group, in which

$Ar^1$, $Ar^2$, $Ar^3$ and $Ar^4$ are identical or different aryl systems having from 6 to 18 carbon atoms,
W, X, Y and Z are identical or different linking groups, selected from the group comprising $-SO_2-$, -S-, -SO-, -O-, -CO-, $-CO_2-$, alkylene or alkylidene having from 1 to 6 carbon atoms and $-NR^1-$, where $R^1$ is an alkyl or alkylide group having from 1 to 6 carbon atoms and at least one linking group must be -S-,
n, m, i, j, k, l, o, p are, equal or different, integers zero, 1, 2, 3 or 4, their sum having to be at least 2.

**3.** The sensor as claimed in claim 1 or 2, wherein the coating contains at least one polyarylene having repeating units of the formulae II, III, IV, V, VI, VII or VIII

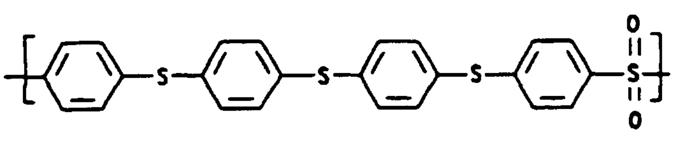

(II)

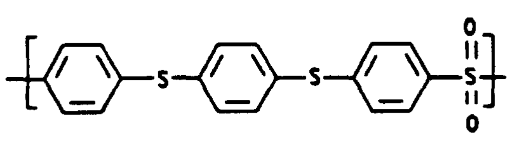

(III)

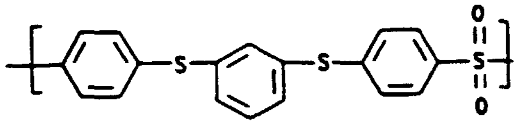

(IV)

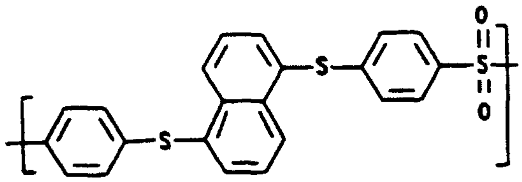

(V)

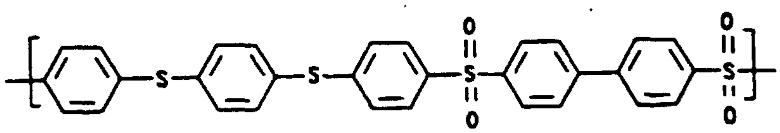

(VI)

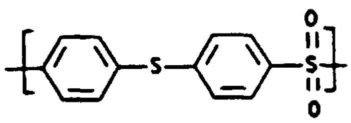

(VII)

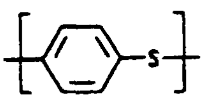

(VIII).

**4.** The sensor as claimed in claim 3, wherein the coating contains a polyarylene having repeating units of the formula VIII.

**5.** The sensor as claimed in one or more of claims 1 to 4, wherein the piezoelectric crystal has a fundamental mode in a frequency range of from 20 kHz to 100 MHz, preferably of from 0.1 MHz to 50 MHz.

**6.** The sensor as claimed in one or more of claims 1 to 5, wherein the piezoelectric crystal has harmonics in a frequency range of from 1 MHz to 1000 MHz, preferably from 30 MHz to 500 MHz.

**7.** The sensor as claimed in one or more of claims 1 to 6, wherein the piezoelectric crystal employed is an alkaline earth metal titanate, lead zirconium titanate or quartz.

**8.** The sensor as claimed in one or more of claims 1 to 7, wherein the piezoelectric crystal employed is quartz.

**9.** The use of a sensor as claimed in claim 1 for detecting halogen, peroxide-containing compounds or ozone.

**10.** The use of a sensor as claimed in claim 1 in the fields of occupational safety and health, immission and emission measurements and as filter monitors.

**Revendications**

**1.** Capteur en un cristal piézoélectrique avec un revêtement contenant du polyarylènethioéther.

**2.** Capteur suivant la revendication 1, caractérisé en ce que le revêtement contient au moins un système polyarylène avec des unités répétitives de formule I

$$-[(Ar^1)_n-X]_m-[(Ar^2)_i-Y]_j-[(Ar^3)_k-Z]_l-[(Ar^4)_o-W]_p- \quad (I)$$

qui contiennent au moins un groupement thioéther, dans laquelle $Ar^1$, $Ar^2$, $Ar^3$ et $Ar^4$ sont des systèmes aryle identiques ou différents avec 6 à 18 atomes de carbone,

W, X, Y et Z sont des groupements de liaison identiques ou différents, sélectionnés parmi le $-SO_2-$, -S-, -SO-, -O-, -CO-, $-CO_2-$, alkylène ou alkylidène avec 1 à 6 atomes de carbone et $-NR^1-$, $R^1$ représentant un groupement alkyle ou alkylidène avec 1 à 6 atomes de carbone et au moins un groupement de liaison devant être -S-, n, m, i, j, k, l, o, p, sont des chiffres entiers zéro, 1, 2, 3 ou 4 identiques ou différents, leur somme devant donner au moins 2.

**3.** Capteur suivant la revendication 1 ou 2, caractérisé en ce que le revêtement contient au moins un polyarylène avec des unités répétitives des formules II, III, IV, V, VI, VII ou VIII

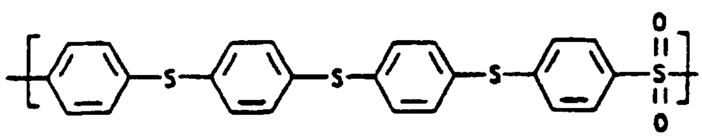

(II)

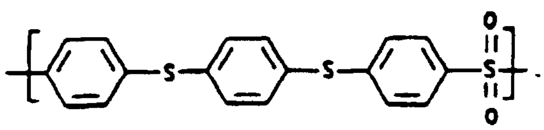

(III)

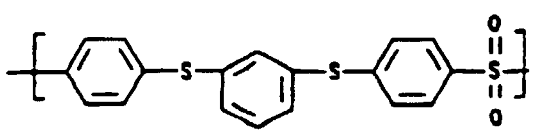

(IV)

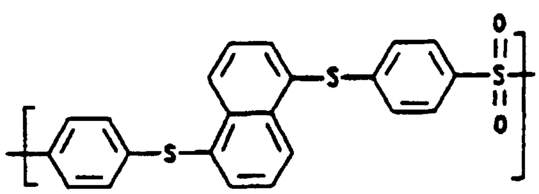

(V)

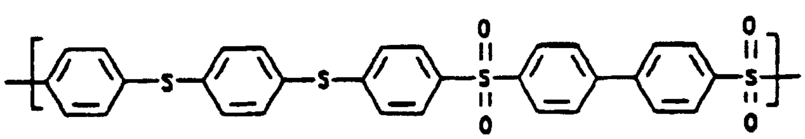

(VI)

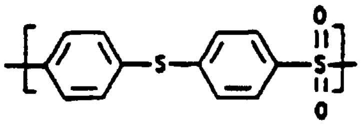

(VII)

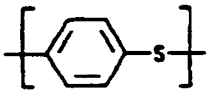

(VIII)

**4.** Capteur suivant la revendication 3, caractérisé en ce que le revêtement contient un polyarylène avec des unités répétitives de formule VIII.

**5.** Capteur suivant l'une ou plusieurs des revendications 1 à 4, caractérisé en ce que le cristal piézoélectrique a une oscillation fondamentale dans un domaine de fréquences de 20 kHz à 100 MHz, de préférence de 0,1 MHz à 50 MHz.

**6.** Capteur suivant l'une ou plusieurs des revendications 1 à 5, caractérisé en ce que le cristal piézoélectrique a des oscillations harmoniques dans un domaine de fréquences de 1 MHz à 1000 MHz, de préférence 30 MHz à 500 MHz.

**7.** Capteur suivant l'une ou plusieurs des revendications 1 à 6, caractérisé en ce qu'on utilise comme cristal piézoélectrique un titanate de métaux alcalino-terreux, un titanate de plomb-zirconium ou du quartz.

**8.** Capteur suivant l'une ou plusieurs des revendications 1 à 7, caractérisé en ce qu'on utilise du quartz comme cristal piézoélectrique.

**9.** Utilisation d'un capteur suivant la revendication 1 pour détecter un halogène, des composés contenant du peroxyde, ou de l'ozone.

**10.** Utilisation d'un capteur suivant la revendication 1 dans le domaine de la protection du travail, des mesures d'immissions et d'émissions ainsi que comme dispositif de surveillance de filtre.